# EUROPEAN PATENT SPECIFICATION

(11) **EP 1 295 968 B1**
(45) Date of publication and mention of the grant of the patent: **30.04.2008**
(21) Application number: 01934519.8
(22) Date of filing: 04.06.2001
(51) Int. Cl.: C25D 15/00, H01M 4/88, H01M 8/10

(54) **GAS DIFFUSION ELECTRODE, METHOD FOR MANUFACTURING THE SAME AND FUEL CELL USING IT**
GASDIFFUSIONSELEKTRODE, HERSTELLUNGSVERFAHREN DAFÜR UND DIESE VERWENDENDE BRENNSTOFFZELLE
ELECTRODE A DIFFUSION GAZEUSE, PROCEDE DE FABRICATION SIMILAIRE ET PILE A COMBUSTIBLE L'UTILISANT

(30) Priority: 06.06.2000 JP 2000169302; 09.06.2000 JP 2000173960; 17.07.2000 JP 2000216187; 11.08.2000 JP 2000244525; 18.05.2001 JP 2001149494
(43) Date of publication of application: 26.03.2003
(73) Proprietor: Furuya, Nagakazu, Kofu-shi, Yamanashi 400-0024 (JP)
(72) Inventor: Furuya, Nagakazu, Kofu-shi, Yamanashi 400-0024 (JP)
(74) Representative: Ward, David Ian
(86) International application number: PCT/JP2001/004693
(87) International publication number: WO 2001/094668

(56) References cited:
- EP-A- 1 065 739
- JP-A- 62 165 869
- SU-A- 745 964
- US-A- 3 635 809
- PATENT ABSTRACTS OF JAPAN vol. 012, no. 007 (E-571), 9 January 1988 (1988-01-09) & JP 62 165869 A (HITACHI LTD), 22 July 1987 (1987-07-22)

## Description

### Background of the Invention

### Field of the Invention

The present invention relates to a gas diffusion electrode suitable for use as an oxygen cathode in a chlor-alkari electrolysis, as well as in a fuel cell.

More particularly, the present invention relates to a gas diffusion electrode capable of being manufactured in a short time through a simple operation, a method for manufacturing the gas diffusion electrode, and a fuel cell employing, as a compositional material, the gas diffusion electrode, in particular, a polymer electrolyte fuel cell.

### Description of related Art

A gas diffusion electrode is used, for example, as an oxygen cathode in a chlor-alkari electrolysis and in an oxygen-hydrogen fuel cell. A fuel cell employing the gas diffusion electrode comprises three components, i.e., an oxygen electrode (cathode) for supplying oxygen, an electrolytic plate for holding an electrolyte, and a fuel electrode (anode) to which fuel is supplied. In the chlor-alkari electrolysis, only an oxygen electrode (cathode) for supplying oxygen is used as the oxygen cathode.

In particular, a polymer electrolyte fuel cell has a structure that gas diffusion electrodes are arranged on both surfaces of an ion exchange membrane (polymer electrolyte film).

Such a gas diffusion electrode comprises a reaction layer and a gas supply layer. In the ordinary state, a liquid electrolyte and reaction gas are supplied to the electrode having a fixed surface, whereby a three-phase interface is formed on the electrode surface. Then, the electrochemical reaction progresses at the interface for performing power generation or electrode restoration.

The gas diffusion electrode is usually made up of a catalyst, carbon black, polytetrafluoroethylene (PTFE), and a current collector.

In general, the gas diffusion electrode has a thickness of about 0.6 mm and is divided into a gas supply layer of about 0.5 mm and a reaction layer of about 0.1 mm.

The gas supply layer constituting the gas diffusion electrode is made up of, e.g., micro particles of hydrophobic carbon black and polytetrafluoroethylene (PTFE).

Also, the reaction layer is made up of micro particles of a catalyst, hydrophilic carbon black, hydrophobic carbon black, and polytetrafluoroethylene (PTFE).

In the manufacture of the gas diffusion electrode, therefore, a liquid dispersion containing micro particles of a catalyst, hydrophilic carbon black, hydrophobic carbon black, PTFE, etc., as electrode materials, is used.

Further, if necessary, an additional solution of a polymer electrolyte (such as a fluorine-based ion exchange resin, for example, liquid Nafion made by DuPont) is used. An aqueous dispersion in which those materials are evenly mixed and dispersed is prepared using a quantity of water with about 20 to 100 times the weight of the carbon black inclusive of a surfactant.

Ultrasonic waves, for example, are irradiated to finely disperse the gas diffusion electrode materials in an aqueous medium. With irradiation of ultrasonic waves, material particles are stabilized in the colloidal state.

The gas diffusion electrode is fabricated using the aqueous medium in which the gas diffusion electrode materials are dispersed (hereinafter referred to simply as the "aqueous dispersion").

To form the gas supply layer and the reaction layer of the gas diffusion electrode, the aqueous dispersion medium must be removed from the aqueous dispersion.

If the dispersion medium is removed by filtering, for example, a difficulty would arise in filtering micro particles finely dispersed in the stabilized state and a long time, two days or more, would be required until the filtering is completed.

If alcohol is added to the aqueous dispersion to forcibly cohere the micro particles for overcoming the above problems, the filtering time could be shortened to about 3 hours, but another problem would be more likely to occur in that PTFE micro particles tend to segregate and the PTFE concentration in the formed reaction layer is locally different, thus resulting in unevenness of the composition.

After removing the dispersion medium by, e.g., filtering, the separated dispersoid is dried and formed into sheets with the addition of solvent naphtha. A sheet for the gas supply layer and a sheet for the reaction layer are thus obtained.

Then, the sheets are laid one on another to form a gas diffusion electrode sheet having a predetermined thickness. After removing the surfactant used for the purpose of dispersing particles from the sheet, the sheet is further dried. Eventually, the gas diffusion electrode is obtained by hot pressing the dried sheet together with a current collector.

A polymer electrolyte fuel cell having a structure in which gas diffusion electrodes are arranged on both surfaces of an ion exchange membrane (polymer electrolyte film) is manufactured as follows. A solution of a polymer electrolyte (such as a fluorine-based ion exchange resin, for example, liquid Nafion made by DuPont) is added to and mixed in a liquid dispersion of carbon black on which a catalyst is carried. Then, a flocculant is added to obtain a mixed liquid dispersion of the fluororesin and the catalyst-carrying carbon black caught by the fluororesin. The mixed liquid dispersion is coated on, e.g., a Teflon film for forming the reaction layer and then dried to form a reaction layer film. This reaction layer film is press-bonded to a film of a polymer electrolyte (such as a fluorine-based ion exchange resin, for example, Nafion made by DuPont) while heating to obtain a joined electrode of the reaction layer and the polymer electrolyte.

Many proposals for improving the above-described method have been made so far and some of those proposals are given below.
1) A method comprising the steps of mixing a nonaqueous dispersion, which is prepared by dispersing carbon powder carrying a rare metal catalyst thereon, with an alcohol solution of a polymer electrolyte, and then coating the thus-mixed dispersion in which the polymer electrolyte is in the colloidal state and adsorbed onto the carbon powder (Japanese Patent Application Laid-Open No. 10-302805).
2) A method comprising the steps of coating a dispersion of a catalyst and a polymer electrolyte, and treating the coated film with an acidic solution (Japanese Patent Application Laid-Open No. 11-45730).
3) A method comprising the steps of coating an ink- or paste-like catalyst mixture on the surface of an electrolyte film, and then press-bonding a gas diffusion layer to the electrolyte film (Japanese Patent Application Laid-Open No. 2000-90944).
4) A method comprising the steps of coating a polymer electrolyte solution on a swollen film of a refined polymer electrolyte, dipping the film in an organic solvent having a polar group to form a porous electrolyte having three-dimensional communicating pores, and utilizing the porous electrolyte thus obtained (Japanese Patent Application Laid-Open No. 2000-106200).

However, all of these methods require complicated steps including cohesion, coating, drying, etc., and still entail a high production cost. Accordingly, there is at present a strong demand for reducing the production cost and improving the electrode performance.

Further, if the PTFE concentration is locally different and uneven in the reaction layer and so on, such a property adversely affects the performance of the reaction layer and the gas supply layer of the gas diffusion electrode as a final product.

In other words, as found from a long-term durability test, unevenness of the PTFE concentration causes easy wetting of the electrode and has been a major factor in reducing the electrode life.

If the aqueous dispersion is solidified while maintaining the evenly dispersed state, the above-mentioned drawbacks could be overcome and the risk of impairing the high performance and the long life of the electrode could be avoided.

Solidifying the aqueous dispersion while maintaining the evenly dispersed state requires the aqueous dispersion to be subjected to filtering. As stated above, however, the filtering encounters difficulty and takes a long time, two days or more, until the filtering is completed.

It is therefore demanded to bring an aqueous dispersion having a high water content into a cake-like (solid) piece having a low water content in a short time.

Meanwhile, the steps including aggregation, filtering, etc. are complicated, entail a high production cost, and have a difficulty in fabricating large-sized sheets. Solution of these problems is also demanded.

With the view of solving the problems set forth above, the inventor has analyzed the steps employed in conventional techniques for obtaining a gas diffusion electrode having a reaction layer and a gas supply layer, which have a low water content and are uniform, in a short time while maintaining dispersed state in the electorode.

Based on results of the analysis, the inventor has made intensive studies on means for manufacturing, with simpler means, not only a gas diffusion electrode, but also a reaction layer and a gas supply layer of the gas diffusion electrode, which are basic elements of a polymer electrolyte fuel cell.

As a result, the inventor has reached the following findings and has succeeded in overcoming the above-stated problems based on the findings:
A) In an alcohol solution of a polymer electrolyte (such as a solution of a fluorine-based ion exchange resin, for example, Nafion made by DuPont), the zeta-potential of the polymer electrolyte in the solution is negative. Therefore, by applying an electric field, the polymer electrolyte is moved toward the side of an anode side by electrophoresis and is electrically deposited on the anode.
B) Micro particles of fluororesin, etc. dispersed in water are also usually charged with negative ions. Hence, those micro particles are deposited on one electrode by electrophoresis and are easily separated from the dispersion medium. More specifically, when an aqueous dispersion is filled between two electrodes (metal plates) and a voltage of about 200 to 300 V is charged between them, the fluororesin micro anion particles, etc. are evenly deposited on the anode to form a deposit in a cake-like shape containing the fluororesin. The fluororesin-containing porous deposit thus obtained exhibits superior performance when used as the reaction layer and the gas supply layer of the gas diffusion electrode.
C) Carbon black, etc. has nearly null of the zeta-potential and electrophoresis in ethanol is not occurred. However, under electrophoresis of the solution of the polymer electrolyte or the liquid dispersion containing the fluororesin micro particles, even carbon black, etc. are deposited together with the polymer electrolyte or the fluororesin micro particles.

An object of the present invention is to provide a high-performance and long-life gas diffusion electrode at lower cost by a simple manufacturing method for deposit, from a aqueous dispersion having a high water content, a fluororesin-containing in porous state, which has a small water content, causes no concentration difference due to segregation of fluororesin, and has an even concentration distribution, in a short time, and for forming a reaction layer and a gas supply layer of the gas diffusion electrode by using the prepared fluororesin-containing porous deposit.

Another object of the present invention is to provide a polymer electrolyte fuel cell that has superior mass-productivity, can be manufactured by a simpler apparatus at a lower cost, and has high performance and a long life, wherein a polymer electrolyte film as an electrode material is also formed by a method comprising the steps of immersing a cathode and an anode in a solution of a polymer electrolyte, e.g., Nafion (made by DuPont), (hereinafter referred to simply as "solution") as an electrophoresis liquid, applying an electrical current between both the electrodes to move the polymer electrolyte toward the anode by electrophoresis, and electrodepositing the polymer electrolyte on the anode or a perforated plate disposed near the anode.

### Summary of the Invention

To achieve the above objects, the present invention provides a gas diffusion electrode including a gas supply layer or/and a reaction layer as a compositional material, which are each formed on a surface of a conductive base through deposit by electrophoresis of gas diffusion electrode materials comprising micro particles of fluororesin, as a primary constituent, dispersed in dispersion medium.

Also, the present invention provides a gas diffusion electrode including a gas supply layer or/and a reaction layer, as a compositional material, which are each formed on a surface of a conductive base through deposit by electrophoresis of gas diffusion electrode materials comprising micro particles of fluororesin as a primary constituent and one or more kinds of micro particles selected from among hydrophobic carbon black, hydrophilic carbon black and catalysts dispersed in dispersion medium.

Further, the present invention provides a method for manufacturing a gas diffusion electrode comprising the steps of forming a fluororesin-containing porous deposit through deposition, on a surface of a conductive base, by electrophoresis of gas diffusion electrode materials comprising micro particles of fluororesin, as a primary constituent, dispersed in a dispersion medium, and employing the formed fluororesin-containing porous deposit as a gas supply layer or/and a reaction layer of the gas diffusion electrode.

Still further, the present invention provides a method for manufacturing a gas diffusion electrode comprising the steps of forming a fluororesin-containing porous deposit on a surface of a conductive base, by electrophoresis of gas diffusion electrode materials comprising micro particles of fluororesin as a primary constituent and one or more kinds of micro particles selected from among hydrophobic carbon black, hydrophilic carbon black and catalysts dispersed in dispersion medium, and employing the formed fluororesin-containing porous deposit as a gas supply layer or/and a reaction layer of the gas diffusion electrode.

Still further, the present invention provides a fuel cell including, as a compositional material, the gas diffusion electrode set forth above.

Still further, the present invention provides a polymer electrolyte fuel cell including, as a compositional material, the gas diffusion electrode set forth above.

### Brief Description of the Drawings

Fig. 1 is a schematic explanatory view showing one example of the present invention of a method for manufacturing a porous deposit and a gas diffusion electrode, which contain micro particles of fluororesin.
Fig. 2 is a schematic explanatory view showing another example of the present invention of a method for manufacturing a porous deposit and a gas diffusion electrode, which contains micro particles of fluororesin.
Fig. 3 is a graph showing the temperature dependency of the amount of electrodeposition in manufacture of the fluororesin-containing porous deposit according to the present invention.
Fig. 4 is a graph showing the temperature dependency of electrodeposition efficiency (amount of electrodeposition per coulomb) in manufacture of the fluororesin-containing porous deposit according to the present invention.
Fig. 5 is a graph showing the temperature dependency of the percentage of the solvent content in manufacture of the fluororesin-containing porous deposit according to the present invention.
Fig. 6 is a schematic explanatory view of an acrylic cell used in Example 9 of the present invention.

### Detailed Description of the Invention and Preferred Embodiment

A gas diffusion electrode of the present invention, particularly a reaction layer and a gas supply layer of the gas diffusion electrode, a method for manufacturing them, and a fuel cell employing them will be described in detail with reference to the accompanying drawings. Note that the present invention is not limited to the embodiments and examples described below.

In the present invention, all or any of the reaction layer and the gas supply layer constituting the gas diffusion electrode is characterized by being formed by electrophoretic deposit. Further, a polymer electrolyte film for use in a polymer electrolyte fuel cell having a structure, in which the gas diffusion electrodes are arranged on both surfaces of the polymer electrolyte film, can also be formed by electrophoretic deposit.

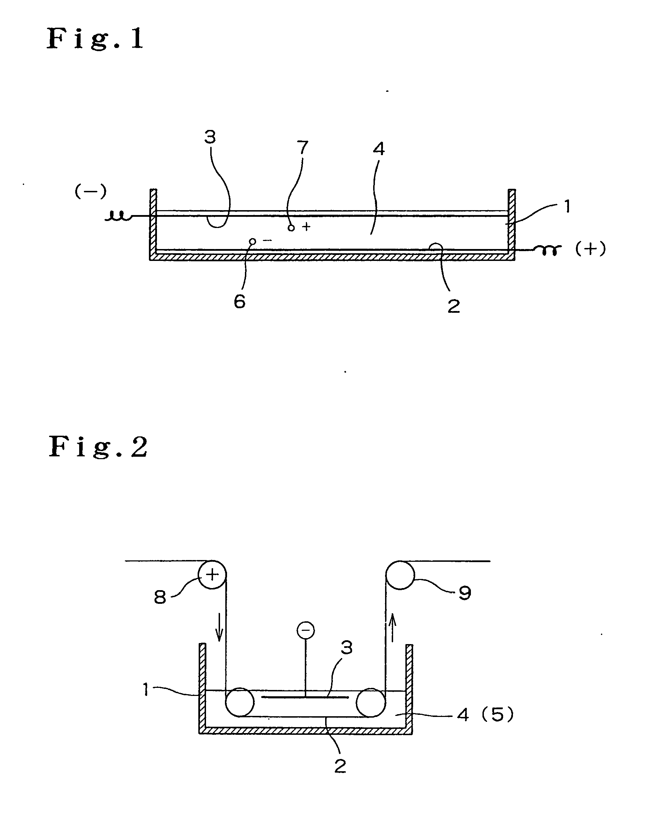

Fig. 1 is a schematic explanatory view showing a method for manufacturing a gas diffusion electrode according to the present invention. The manufacturing method is carried out using, as basic component elements, a DC stabilized power supply, a pair of porous opposing electrodes disposed parallel to each other, a silver mesh as a perforated plate, and a liquid dispersion of gas diffusion electrode materials primarily comprising micro particles of fluororesin.

### <Construction of Electrophoresis Bath>

A silver mesh is laid at the bottom of a cylindrical glass container 1 to serve as an anode 2, and a liquid dispersion 4 is filled in the glass container 1. A nickel mesh is disposed at a position slightly lower than the surface level of the liquid dispersion 4 parallel to the silver mesh in order to serve as a cathode 3.

Theoretically, electrophoresis can be performed regardless of whether the anode 2 and the cathode 3 are arranged to extend horizontally or vertically.

However, because hydrophilic carbon black, hydrophobic carbon black, etc. dispersed in the liquid dispersion 4 tend to settle down by the action of gravity, it is usually preferable that the anode 2 and the cathode 3 be arranged to extend horizontally and a conductive base on which the gas diffusion electrode materials are deposited, i.e., the anode 2, be arranged below the cathode 3 so that the direction in which the fluororesin micro particles, etc. are moved under electrophoresis is the same as the settling-down direction of those micro particles by the action of gravity.

The following description is made of a method for deposit the gas diffusion electrode materials on the anode 2.

Such an arrangement of the anode 2 and the cathode 3 is advantageous in that the time required for movement of the gas diffusion electrode materials can be shortened for an improvement in the efficiency, and the gas diffusion electrode materials can be evenly deposited on the anode 2, i.e., the conductive base, in the same composition.

In electrophoresis, the anode 2 is not always required to be held stationary. By continuously moving the anode 2 as shown in Fig. 2, it is possible to manufacture a porous deposit, on which the gas diffusion electrode materials are evenly deposited, in a continuous manner.

In particular, preferably, the porous deposit is manufactured in a continuous manner by employing a metal mesh as the anode, which serves also as a base for the porous deposit, and by continuously moving the metal mesh.

Materials usable for the anode 2 include, e.g., metals such as noble metals, silver, copper, zinc, iron, aluminum, nickel and stainless, alloys of two or more selected from among them, and carbon. The cathode 3 can also be made of similar materials. The distance between both the electrodes is preferably in the range of 5 to 100 mm. If the distance is too short, there is a risk of short circuit, and if it is too long, a higher voltage power supply is required.

When metals such as zinc, copper, iron, aluminum and nickel are used as materials of the anode 2, a deposit formed by electrodeposition contains the metal of about 0.01 to 2% and even such a trace amount of the metal may function as a catalyst in the gas diffusion electrode. If the presence of that metal raises a problem, the anode 2 is preferably made of carbon, platinum, gold, palladium or the like.

In the case of using a carbon plate as the anode 2, since the surface at which electrodeposition occurs becomes worn off because of oxidation reaction, the carbon plate surface is preferably plated with a metal, e.g., zinc.

The metal used as the anode 2 is preferably in the form of a mesh, but it may be in the form of a plate. In the case of a mesh, the mesh size is preferably in the range of about 0.5 to 2 mm. Likewise, the cathode 3 may be in the form of a mesh or a plate, but a mesh is preferable because generated hydrogen bubbles are more easily removed. Alternatively, the gas diffusion electrode is also usable.

For reinforcement of the electrode, a fibrous material may be closely disposed to the surface of the anode 2 so that the fibrous material is embedded in the porous deposit formed by electrophoresis.

Additionally, by arranging a filter (filter paper) closely to the surface of the anode 2, the gas diffusion electrode materials can be deposited on the filter, and the porous deposit formed by electrophoresis can be easily separated from the anode 2.

Further, by providing a diaphragm between the anode 2 and the cathode 3 to define an anode chamber and a cathode chamber separately from each other, it is possible to avoid the problem of the liquid dispersion becoming alkaline with OH⁻ ions produced along with generation of hydrogen at the cathode 3, which increases the electrical conductivity of the liquid dispersion, causes an excessive current to flow, and impedes the progress of electrodeposition. As a result, the temperature of the liquid dispersion is elevated due to an excessive current flowing and the electrodeposition process is adversely affected.

In other words, with the provision of a diaphragm to separate an electrodeposition vessel into an anode chamber and a cathode chamber, OH⁻ ions produced at the cathode 3 can be prevented from moving into the anode chamber, and an increase in the electrical conductivity of the liquid dispersion can be avoided. Therefore, pH changes of the liquid dispersion can be held small and contamination of the cathode can be minimized.

The diaphragm can be formed of, e.g., a porous membrane or an ion exchange membrane. The ion exchange membrane may be a cation exchange membrane, a composite membrane of cation exchange membrane and a carboxylic acid membrane, etc.

### <Preparation of Liquid Dispersion >

The liquid dispersion of the gas diffusion electrode materials primarily comprising micro particles of fluororesin is prepared as follows. In the case of the aqueous dispersion used for forming the gas supply layer, for example, hydrophobic carbon black is dispersed in water containing a surfactant under agitation, and then further dispersed using a jet mill for reducing the particle size to 1 micron or less. Added to the thus-obtained aqueous dispersion is a dispersion of fluororesin micro particles, e.g., a PTFE dispersion, followed by mixing under agitation.

When preparing the gas diffusion electrode for a polymer electrolyte fuel cell, an alcohol solution of a polymer electrolyte (such as a solution of a fluorine-based ion exchange resin, for example, Nafion made by DuPont) may be mixed with the dispersion of fluororesin micro particles. This mixing contributes to increased adhesion between the reaction layer and the polymer electrolyte film.

The fluororesin micro particles may be, for example, micro particles of a polytetrafluoroethylene, a copolymer of tetrafluoroethylene and hexafluoropropylene, a polytrifluoroethylene chloride, or a perfluoroalkoxy resin.

In the case of the liquid dispersion used for forming the reaction layer, it is similarly prepared using micro particles of hydrophilic carbon black, a catalyst, etc. in addition to hydrophobic carbon black.

On that occasion, the catalyst and the hydrophilic carbon black may be applied, instead of being separate micro particles, in the form of united micro particles in which the catalyst adheres to the hydrophilic carbon black.

The fluororesin micro particles can be same to the materials as those mentioned above. The catalyst may be prepared as micro particles of a metal selected from among gold, silver, platinum metals and alloys of these metals, or micro particles of any of oxides of them.

### <Adjustment of Electrical Conductivity of Liquid Dispersion>

In preparing the liquid dispersion, the electrical conductivity of the liquid dispersion is preferably held at a relatively low and constant level. If the electrical conductivity of the liquid dispersion is not constant, there would arise a risk that the thickness of the obtained porous deposit containing the fluororesin micro particles, i.e., the amount of the micro particles electrodeposited, cannot be kept constant.

Also, if the electrical conductivity of the liquid dispersion is as high as about 150 µS/cm, there would arise a risk that since the current exceeds more than 1 A/dm², a power supply having a larger capacity is required when the electrodeposition is to be performed over a large area, and the temperature of liquid dispersion is noticeably increased because of the Joule heating, whereupon the oxidation reaction occurs more vigorously at the anode and the silver mesh forming the anode is dissolved causing a large amount of silver ions to mix in the dispersion, thus resulting in aggregation of the particles in dispersion.

Uneven electrical conductivity of the liquid dispersion is attributable to the fact that the amount of ions in the liquid dispersion of the fluororesin micro particles used as the electrode materials, the amount of ions contained in carbon black and the surfactant, etc. are not constant.

Looking at commercially available PTFE dispersions, for example, PTFE Dispersion 30J made by DuPont has an electrical conductivity of 0.98 mS/cm, and PTFE Dispersion D-1 made by DAIKIN INDUSTRIES Ltd. has an electrical conductivity of 0.39 mS/cm.

A surfactant Triton (surfactant made by Union Carbide) used as a dispersant has an electrical conductivity that greatly varies in the range of 48 µS/cm to 28 µS/cm from lot to lot when it is prepared as a 4% aqueous solution.

The electrical conductivity of the aqueous surfactant solution can be reduced by treating with cation and anion ion exchange resins. The electrical conductivity of the Triton 4% aqueous solution is reduced to 2 µS/cm as a result of that treatment.

When the aqueous dispersion is prepared from hydrophobic carbon black and PTFE Dispersion D-1 by using the aqueous surfactant solution, its electrical conductivity is as low as 50 µS/cm. The aqueous dispersion having such a level of electrical conductivity is satisfactorily usable. By diluting that aqueous dispersion to 1/2 concentration with deionized water, the electrical conductivity is reduced to 27 µS/cm, where the electrodeposition can proceed more easily.

In the case of using the PTFE dispersion having such a high electrical conductivity that the aqueous dispersion with an electrical conductivity of not more than 50 µS/cm can not be obtained even by using deionized water or a deionized aqueous surfactant solution, the PTFE dispersion itself must be treated with an ion exchange resin. When the PTFE dispersion has a high concentration, PTFE micro particles adhere to the ion exchange resin and therefore that PTFE dispersion is preferably treated after diluting it (about 5 times) with deionized water. With such treatment, the electrical conductivity of the PTFE dispersion can be adjusted to be not more than 30 µS/cm.

The relationship between the electrical conductivity of the liquid dispersion and the current is substantially proportional, while the amount of electrodeposit does not so change much with the electrical conductivity of the liquid dispersion. By reducing the electrical conductivity of the liquid dispersion, a larger fluororesin-containing porous deposit can be produced using a power supply of a smaller capacity without reducing the electrodeposition rate.

Further, in the liquid dispersion having the same electrical conductivity, since the relationship between the voltage and the amount of electrodeposit is proportional in the range of 2 to 100 V/cm, the amount of each of the reaction layer and the gas supply layer electrodeposited can be electrochemically controlled by controlling the electrical conductivity of the liquid dispersion to be held constant. Hence, an electrodeposition can be obtained with high reproducibility.

Because the aqueous dispersion is desirably held at a pH of about 9 for the purpose of long-term preservation, the pH of the aqueous dispersion is adjusted with, e.g., ammonia. Increasing the pH value of the aqueous dispersion increases the electrical conductivity. In the pH range of 4 to 9, however, the current rises, but the effect upon the amount of electrodeposit is slight and the change in the amount of electrodeposit is not enough to cause a problem in the above pH range.

The porous deposit formed on the surface of the anode 2 by electrodeposition may flow out from the anode 2 if the water content of the formed porous deposit is too large. To avoid such a drawback, a water-content reducing agent for reducing the water content of the porous deposit formed by the electrodeposition is added as an additive to the aqueous dispersion.

It is presumed that the water-content reducing agent has a small degree of dissociation in the aqueous dispersion and dissociates at the electrode surface to produce ions, thereby developing its ability to assist the movement of the water.

Practical examples of the water-content reducing agent include chemical compounds such as urea, glycerin, boric acid, saccharin, methyltriphenylphosphonium bromide, thiourea, polyethylene glycol #300, formamide, butyldiethanolamine, aniline, nitrilotriethanol, dimethylaminoethanol, glycine, copper acetate, nicotinic acid, tetramethylethyldiamine, thiodiglycol, lauryltrimethylalminum chloride, triethanolamine, butyltriethanolamine, guanidine carbonate, laurylpyridinium chloride, pyrogallol, catechol, Br hexadecyltrimethylammonium, acetamide, allylamine, barbital Na, pyridine, and triethanolamine.

Those agents are able to reduce, by 1% to 11%, the water content of the porous deposit formed by electrodeposition by adding them in such an amount that the electrical conductivity of the aqueous dispersion does not exceed 0.2 µS/cm, specifically in an amount ranging from 0.1 to 2 mmol/l. Thus, the agents function to prevent the water content from increasing to an excessive level and hence to prevent the porous deposit formed by electrodeposition from flowing out from the anode 2.

Among the above agents, preferable ones are triethanolamine, laurylpyridinium chloride, pyrogallol and butyltriethanolamine because they can reduce the water content to a larger extent. These agents can provide a significant effect even when used alone, and can provide a more significant effect when several of them are used in combination.

The following agents are ones that provide no effect when the water content is low, but are applicable to, in particular, a porous deposit which is electrodeposited at temperature of not lower than 30°C and has a high water content of not less than 60%.

Examples of those agents include sodium formate, triethyleneglycol, propyleneglycol, dimethylformamide, polyethyleneglycol #600, methanol, ethanol, pyrrolizine, hexyleneglycol, barbital, polyvinylpyrrolidone, dulcin, glucose, SDS, NMP, vinylpyrrolidone, dodecanethiol, glutamic acid, ethyleneimine, β alanine, arginine, nicotinamide, pyridinol, D xylose, and dopamine hydrochloride.

### <Formation of Fluororesin-Containing Porous Body>

By charging a DC voltage of 5 to 300 V and causing an electrical current of about 10 to 200 mA to flow between the anode 2 and the cathode 4 for about 20 to 60 minutes, a fluororesin-containing porous deposit (not shown) is deposited preferably in a cake-like shape on the anode 2 by electrophoresis. The deposition rate is in the range of 90 to 99% or more.

The power supply may be a DC constant-voltage power supply, a DC constant-current power supply, a DC pulse current power supply, etc. These power supplies can be employed depending on the application, that is, whether a fluororesin concentration is to be made in the porous deposit or whether a gradient is to be provided in the fluororesin concentration.

Electrophoresis can proceed and is preferably performed at the normal temperature. When electrophoresis is carried out in an aqueous dispersion having a low concentration of micro particles and a high electrical conductivity at a high voltage, the temperature of the aqueous dispersion may noticeably rise because of Joule heating.

If electrophoresis is carried out in a liquid dispersion having a temperature in excess of 30°C, the formed fluororesin-containing porous deposit would contain 50% or more of the solvent (water) and binding forces among micro particles in the fluororesin-containing porous deposit would be weakened, thus resulting in a risk that the formed porous deposit may flow out due to increased fluidity, when lifted up from the liquid dispersion. For that reason, it is desired that the electrophoresis be performed while controlling the temperature of the liquid dispersion in the range not exceeding 30°C, and preferably in the range not exceeding 20°C.

The obtained fluororesin-containing porous deposit, in particular, the cake-shaped fluororesin-containing porous deposit, is dried and then pressed into the form of a sheet by rolling with the addition of solvent naphtha for obtaining a sheet for the reaction layer and/or the gas supply layer of the gas diffusion electrode.

When fabricating the gas diffusion electrode by using the gas supply layer thus obtained, a water repellent layer made of fluororesin is preferably coated on an the entire surface of the gas supply layer in a pattern of dots each having a diameter of about 1 mm or in a stripe pattern for ensuring long-term stability of the gas diffusion electrode.

When the water content of the obtained fluororesin-containing porous deposit is about 50%, there is a risk that cracks may occur with shrinkage in a drying step of the fluororesin-containing porous deposit. The generated cracks can seemingly be eliminated by hot pressing, but the strength of the fluororesin-containing porous deposit is partly reduced in areas including the cracks. In such a case, it is hence preferable to prevent the generation of cracks by pressing the porous deposit in the thickness direction of the electrode with a force stronger than the contractile force in the drying step.

Further, since the drying step takes one day or longer at normal temperatures, the drying step is desirably performed at an elevated temperature to increase the water vapor pressure for quicker drying, but the preferable range of the drying temperature is not higher than 200°C.

If the drying temperature is too high, there would arise risks that the porous deposit containing a surfactant may decompose and that, when the solvent is alcohol or the like, the vapor pressure may rise to an excessively high level and the electrode may break because of explosive evaporation. Those risks can be prevented by employing a method of holding both surfaces of the fluororesin-containing porous deposit between porous films, further holding it between perforated plates through which gas is able to satisfactorily move under pressure, and then removing the solvent under pressure and heat.

### <Fabrication of Polymer Electrolyte Fuel Cell>

Examples of a method for manufacturing a polymer electrolyte fuel cell employing the gas diffusion electrode of the present invention will be described below in brief.
1) Using a stainless foil as an anode, the following layers are successively electrodeposited on the foil by electrophoresis:
   · a gas supply layer (electrophoretic deposition with a liquid dispersion of micro particles of fluororesin and hydrophobic carbon black),
   · a reaction layer (electrophoretic deposition with a solution or a liquid dispersion of fluororesin, micro particles of hydrophobic carbon black, hydrophilic carbon black, a catalyst, and a metal or a metal oxide, etc.), and
   · a polymer electrolyte film (electrophoretic deposition with a solution).

   Two stainless foils, on each of which the gas supply layer, the reaction layer and the polymer electrolyte film obtained as described above are multilayered in a half dried state, are joined to each other under heat and pressure with the two laminates positioned on respective inner sides. Then, the outer stainless foils are peeled off from the joined laminates.
2) Similarly to the above 1), a reaction layer and a polymer electrolyte film are deposited on a stainless foil by electrophoresis to form a laminate of the reaction layer and the polymer electrolyte film. Then, a water-repellent carbon paper or the like is employed as a gas supply layer.
3) Similarly to the above 1), a reaction layer and a gas supply layer are successively electrodeposited on a stainless foil to form a laminate of the reaction layer and the gas supply layer. Two stainless foils, on each of which the reaction layer and the gas supply layer are multilayered in a half dried state, are joined to each other under heat and pressure with a polymer electrolyte film. Then, the outer stainless foils are peeled off from the joined laminates.
   In forming the reaction layer by electrophoresis, a solution of the polymer electrolyte film is preferably used in addition to the electrophoresis liquid. This combined use contributes to improved adhesion between the reaction layer and the polymer electrolyte film.
4) A polymer electrolyte film is disposed in an electrophoresis vessel between an anode and a cathode, whereby micro particles migrating under electrophoresis are deposited on the polymer electrolyte film so that a reaction layer and a gas supply layer are formed on the film.
5) Similarly to the above 1), a reaction layer, a polymer electrolyte film, and another reaction layer are successively electrodeposited on a stainless foil to form a laminate of the reaction layer / the polymer electrolyte film / the reaction layer. Then, water-repellent carbon paper or the like is employed as a gas supply layer.
6) Similarly to the above 1), a gas supply layer, a reaction layer, a polymer electrolyte film, a reaction layer, and a gas supply layer are successively electrodeposited on a stainless foil to form a laminate of the gas supply layer / the reaction layer / the polymer electrolyte film / the reaction layer / the gas supply layer.

The above examples of the manufacturing method are given only by way of example and the methods forming the individual layers are not limited thereto. As described above, the reaction layer and/or the gas supply layer formed by the electrophoretic deposition can be employed after drying and then pressing those layers into the form of sheets by rolling with addition of, e.g., solvent naphtha for obtaining a reaction layer sheet and/or a gas supply layer sheet.

When pressing the formed reaction layer and gas supply layer in a half dried state under heat, it is a feasible and preferable method to employ a porous deposit as a pressing plate, for example, and to provide a water repellent layer made of fluororesin on the entire surface of the gas supply layer in a pattern of dots each having a diameter of about 1 mm or in a stripe pattern.

In the present invention, the liquid dispersion of micro particles of fluororesin, e.g., the PTFE aqueous dispersion, which is a basic factor for forming the fluororesin-containing porous deposit serving as the gas supply layer and/or the reaction layer of the gas diffusion electrode.

Because not only the fluororesin micro particles dispersed in water, but also hydrophobic carbon black and hydrophilic carbon black both dispersed in the aqueous dispersion containing the fluororesin micro particles are usually charged with negative ions, those micro particles can be deposited on the anode by electrophoresis.

On the other hand, when the aqueous dispersion of the fluororesin micro particles is prepared using a cationic surfactant, positive ions can be added to the fluororesin micro particles, hydrophobic carbon black and hydrophilic carbon black. In that case, those micro particles can be deposited on the cathode.

Thus, in the present invention, a conductive base is immersed, as one electrode, in the aqueous dispersion of the fluororesin micro particles, or in the aqueous dispersion in which additives, such as hydrophobic carbon black, hydrophilic carbon black, a catalyst, and micro particles of a metal or a metal oxide, are dispersed in addition to the fluororesin micro particles. An electrical current is made to flow between the one electrode and the other electrode immersed in the aqueous dispersion, whereby the fluororesin-containing porous deposit or the fluororesin-containing porous deposit containing the above various additives can be formed on the surface of the conductive base (anode or cathode) by electrophoresis. Any of those fluororesin-containing porous deposit can be used as a base material for the gas supply layer and/or the reaction layer of the gas diffusion electrode.

Accordingly, the present invention can eliminate the steps of cohering, filtering and drying the dispersed materials with alcohol, which have been required in the conventional methods for manufacturing the gas diffusion electrode. An apparatus for implementing the method of the present invention comprises only a constant-voltage power supply for charging a voltage between the electrodes, and therefore the apparatus construction is very simple. Since an electrical current hardly flows between the electrodes, no appreciable electrical power is consumed and the fluororesin-containing porous deposit serving as the gas supply layer and/or the reaction layer of the gas diffusion electrode can be formed highly economically and efficiently.

Also, by constructing the electrodes as a parallel plate system, a uniform electric field is formed between the two electrodes, and hence the formed gas supply layer and reaction layer are free from unevenness in thickness. In addition, since micro particles of the gas diffusion electrode materials are deposited on the electrode surface by the force of electricity, i.e., the Coulomb force, a great adhesion force can be achieved and the fluororesin-containing porous deposit serving as the gas supply layer and/or the reaction layer can be formed at high efficiency.

Further, a polymer electrolyte membrane for use in a polymer electrolyte fuel cell including the gas supply layer and/or the reaction layer on each of both surfaces of the polymer electrolyte membrane can also be formed by electrophoresis.

By applying an electric field to an electrophoresis liquid prepared by dissolving a polymer electrolyte (such as a fluorine-based ion exchange resin, for example, Nafion made by DuPont) in alcohol at high temperature, a polymer electrolyte film can be formed by electrodeposition of the electrolyte through electrophoresis toward the anode.

Even carbon black, etc., which has nearly null of the zeta-potential and electrophoresis in ethanol is not occurred, are deposited together with the polymer electrolyte and the fluororesin micro particles when the carbon black, etc. are dispersed in a liquid along therewith. Such micro particles can be therefore deposited on an anode by electrophoresis.

Thus, in the present invention, a conductive base is immersed, as one electrode, in an electrophoresis liquid prepared by dispersing micro particles of hydrophobic carbon black, hydrophilic carbon black, a catalyst, a metal or a metal oxide, etc. in a solution and/or a dispersion. An electrical current is made to flow between one electrode and the other electrode immersed in the electrophoresis liquid, whereby a polymer electrolyte film can be formed on the surface of the conductive base and the fluororesin-containing porous deposit can be formed on the surface of the formed polymer electrolyte film by electrophoresis. Then, a polymer electrolyte fuel cell can be manufactured using the thus-formed laminate as a base material for the gas supply layer and/or the reaction layer of the gas diffusion electrode.

Examples of the present invention will be described below in detail.

Note that "%" used in all of the following Examples indicates "weight%".

### Example 1

As shown in Fig. 1, a silver mesh serving as a base for a gas diffusion electrode was disposed as an anode 2 at the bottom of an aqueous dispersion 4 in a glass container 1, and a cathode 3 formed of a Ni mesh was disposed above the anode 2 parallel to it with a distance of 1 cm left between the two electrodes.

The aqueous dispersion 4 for forming a gas supply layer was prepared by putting 100 g of hydrophobic carbon black in 800 ml of distilled water containing 4% of Triton (surfactant made by Union Carbide), mechanically dispersing the carbon black using a jet mill for reducing the particle size to 1 micron or less, and adding 75 ml of PTFE dispersion to the dispersion, followed by mixing through agitation.

Under the above conditions, a DC voltage of 50 V was charged between the anode 2 and the cathode 3 from a DC stabilized power supply (not shown) for 60 seconds to form a uniform electric field. Thereby, micro particles 6 provided by the hydrophobic carbon black charged negatively adhered to its surface and by PTFE in the PTFE dispersion were moved from the cathode 3 of the Ni mesh, serving as an opposite electrode, toward the anode 2 of the silver mesh by the Coulomb force under electrophoresis. Finally, the micro particles 6 were deposited on the anode surface and a fluororesin-containing porous deposit serving as the gas supply layer was formed.

Incidentally, numeral 7 in Fig. denotes a positive ion paired with each of the micro particles 6 that are negative ions. The obtained gas supply layer had a thickness of about 0.9 mm.

This Example 1 offers the following advantages. The apparatus construction is simple and therefore the equipment cost can be reduced. Since an electrical current hardly flows between the two electrodes, power consumption is very small. Since a uniform electric field is formed between both the electrodes, the gas supply layer free from unevenness in thickness can be formed in a short time.

### Example 2

Subsequent to the operation of Example 1, the aqueous dispersion 4 put in the glass container 1 for forming the gas supply layer was replaced with a aqueous dispersion for forming a reaction layer. Then, a DC voltage of 50 V was charged between both the electrodes from the DC constant-voltage power supply (not shown) for 15 seconds. As a result, a fluororesin-containing porous deposit serving as the reaction layer was formed on the surface of the anode 2 on which the fluororesin-containing porous deposit serving as the gas supply layer had been formed in Example 1.

The aqueous dispersion for forming the reaction layer was prepared by putting 50 g of hydrophobic carbon black and 50 g of hydrophilic carbon black in 1600 ml of distilled water containing 4% of Triton (surfactant made by Union Carbide), mechanically dispersing the carbon black using a jet mill for reducing the particle size to 1 micron or less, and adding 20 g of silver colloid and 60 ml of PTFE dispersion to the dispersion while mixing. The deposited reaction layer had a thickness of about 0.1 mm. Thus, the reaction layer could be obtained by supplying electrical power for a short time.

### Example 3

Referring to Fig. 2, an aqueous dispersion 4 was prepared by dispersing hydrophobic carbon black and a PTFE dispersion in distilled water, as a solvent, with addition of Triton (surfactant made by Union Carbide).

An anode 2 formed of a web-shaped silver mesh was disposed in the aqueous dispersion 4 to be movable from one side to the other side, and a cathode 3 made of Ni was disposed, as an opposite electrode, above the anode 2.

With the anode 2 positioned to face the cathode 3, micro particles 6 of the hydrophobic carbon black and PTFE, i.e., materials for a gas supply layer, were moved from the cathode 3, serving as the opposite electrode, toward the anode 2. Finally, the micro particles 6 were deposited as a fluororesin-containing porous deposit on the surface of the silver mesh.

The anode 2 including the fluororesin-containing porous deposit formed on its surface was withdrawn from the aqueous dispersion 4 and introduced into a heater (not shown) through a roller 9 for drying.

The dried silver mesh, on which the fluororesin-containing porous deposit serving as the gas supply layer was eormed, was cut into any desired size with a cutter (not shown), whereby a sheet for the gas supply layer was obtained.

By replacing the aqueous dispersion 4 with an aqueous dispersion 5 (denoted by (5) following 4 in Fig. 2) containing material micro particles for a reaction layer dispersed therein, the silver mesh having the reaction layer formed thereon was manufactured in a similar manner.

Alternatively, by passing the silver mesh through the aqueous dispersion 4 and the aqueous dispersion 5 successively, a silver mesh having the gas supply layer and the reaction layer deposited thereon in order can be manufactured. In any case, a gas diffusion electrode was obtained by removing the surfactant from the silver mesh including the deposited gas diffusion electrode materials by using an alcohol extractor, and hot-pressing it after drying.

This Example 3 is advantageous in realizing superior mass-productivity because the gas supply layer and the reaction layer can be successively deposited on the surface of a current collector such as a metal mesh or a carbon felt.

### Example 4

An aqueous dispersion was prepared by putting 100 g of hydrophobic carbon black (No. 6, mean particle size of 500 angstroms, trial product; made by DENKI KAGAKU KOGYO KABUSHIKI KAISHA) in 1000 ml of water containing 4% of surfactant Triton (made by Union Carbide), mechanically dispersing the carbon black twice using a jet mill for reducing the particle size to 1 micron or less, and adding 66 g of PTFE dispersion (D-1; made by DAIKIN INDUSTRIES Ltd.) as PTFE to the dispersion, followed by mixing under agitation.

A silver mesh with a diameter of about 6.2 cm was laid as an anode at the bottom of a cylindrical glass container with an inner diameter of 6.2 cm, and the prepared aqueous dispersion was filled in the glass container up to a depth of 6 cm. A Ni mesh was disposed as a cathode parallel to the anode such that it was immersed in the aqueous dispersion at a position about 6 cm above the silver mesh.

When a DC voltage of 150 V was charged between the anode and the cathode, an electrical current of about 40 mA flowed therebetween. This electrodeposition process by electrophoresis was brought to an end after 30 minutes. As a result, a cake-shaped fluororesin-containing porous deposit was formed on the anode. The deposition rate was 97%.

By drying the cake-shaped fluororesin-containing deposit plate and observing its section, it was confirmed that the porous deposit had a very uniform thickness. Subsequently, the cake-shaped fluororesin-containing porous deposit was shaped into a sheet by rolling after addition of solvent naphtha, whereby a sheet for the gas supply layer was manufactured.

### Example 5

An aqueous dispersion for a reaction layer was prepared as follows. Both 30 g of hydrophobic carbon black (No. 6, mean particle size of 500 angstroms, trial product; made by DENKI KAGAKU KOGYO KABUSHIKI KAISHA) and 70 g of hydrophilic carbon black (AB-12, mean particle size of 400 angstroms, trial product; made by DENKI KAGAKU KOGYO KABUSHIKI KAISHA) were put in 1000 ml of water containing 4% of surfactant Triton (made by Union Carbide). The both types of carbon black were then mechanically dispersed twice using a jet mill for reducing the particle size to 1 micron or less.

To a thus-obtained dispersion, 66 g of PTFE dispersion (D-1; made by DAIKIN INDUSTRIES Ltd.) was added as PTFE, followed by mixing under agitation. Further, 30 g of silver colloid was added and mixed under agitation, whereby the aqueous dispersion for the reaction layer was prepared.

A silver mesh with a diameter of about 6.2 cm was laid as an anode at the bottom of a cylindrical glass container with an inner diameter of 6.2 cm, and the prepared aqueous dispersion was filled in the glass container to a depth of 6 cm. A Ni mesh was disposed as a cathode parallel to the anode such that it was immersed in the aqueous dispersion at a position about 6 cm above the silver mesh.

When a DC voltage of 150 V was charged between the anode and the cathode, an electrical current of about 50 mA flowed therebetween. This electrodeposition process was brought to an end after 30 minutes. As a result, a cake-shaped fluororesin-containing porous deposit was formed on the anode.

A sheet for the reaction layer was obtained by drying the cake-shaped fluororesin-containing porous deposit. The deposition rate was 98%. Observing a section of the sheet for the reaction layer, it was confirmed that the sheet had a very uniform thickness.

Such a sheet for the reaction layer was shaped into a final reaction layer sheet with a thickness of 0.5 mm by rolling after addition of solvent naphtha.

Separately, the above-mentioned sheet for the gas supply layer was shaped into a final gas supply layer sheet with a thickness of 0.1 mm by rolling after addition of solvent naphtha. The final reaction layer sheet was laid on the final gas supply layer sheet to obtain a laminated sheet with a total thickness of 0.6 mm.

After removing the surfactant from the laminated sheet with an extractor using ethyl alcohol and drying it at a temperature of 100°C, a silver mesh (serving as a current collector) with a 50-mesh size and a thickness of 0.19 mm was laid on the side of the gas supply layer and then hot-pressed for 60 seconds at a temperature of 380°C under a pressure of 50 kg/cm². A gas diffusion electrode was thus manufactured.

The manufactured electrode was measured for an oxygen reduction capability. As a result, a high capability of 0.83 V (vs. RHE) was obtained at 30 A/dm².

### Example 6

First, a gas supply layer was electrodeposited as follows.

A silver mesh for forming a gas diffusion electrode was disposed as an anode, and a cathode formed of a Ni mesh was disposed above the anode parallel to it with a distance of 1 cm left between both the electrodes.

An aqueous dispersion for forming the gas supply layer was prepared by putting 100 g of hydrophobic carbon black in 800 ml of distilled water containing 4% of Triton, mechanically dispersing the carbon black using a jet mill for reducing the particle size to 1 micron or less, and adding 40% of PTFE dispersion to the dispersion under mixing.

When a DC voltage of 60 V was charged between both the electrodes for 100 seconds, a fluororesin-containing porous deposit serving as the gas supply layer was electrodeposited on the surface of the silver mesh, serving as the anode, by electrophoresis. The obtained fluororesin-containing porous deposit had a thickness of about 1.2 mm.

Subsequently, the above dispersion was replaced with an aqueous dispersion for forming a reaction layer, which contained hydrophobic carbon black, hydrophilic carbon black, platinum micro particles, and a PTFE dispersion.

By charging a DC voltage of 60 V between both the electrodes for 15 seconds, a fluororesin-containing porous deposit serving as the reaction layer was formed on the gas supply layer. Thus, a multilayered fluororesin-containing porous deposit comprising the gas supply layer and the reaction layer successively formed on the silver mesh was obtained. The formed reaction layer had a thickness of about 0.15 mm.

A laminate was formed by successively laminating the following components including the fluororesin-containing porous deposit :
coarse porous plate (10 ppi; chromium-treated foamed nickel with thickness of 6 mm)
dense porous film (thickness of 2 mm; sintered metal with pore diameter of 20 microns)
filter paper (No. 5C)
fluororesin-containing porous deposit
filter paper
dense porous film
coarse porous plate
This laminate was set in a hot press heated to a temperature of 150°C, pressed under a pressure of 20 to 50 kg/cm², and dried for 20 minutes. As a result, the crack-free and uniform laminate including the fluororesin-containing porous deposit was obtained.

The chromium-treated foamed nickel was highly resistant against pressing, had a porosity of not less than 90%, and allows gas to freely pass therethrough in the lateral direction. The laminate including the fluororesin-containing porous deposit was finished to a gas diffusion electrode through steps of removing the surfactant, drying and hot pressing.

### Example 7

An aqueous dispersion was prepared by putting 100 g of hydrophobic carbon black in 800 ml of distilled water containing 4% of Triton (surfactant made by Union Carbide), mechanically dispersing the carbon black using a jet mill for reducing the particle size to 1 micron or less, and adding 75 ml of PTFE dispersion, followed by mixing under agitation. Then, 22 ml of the thus-prepared aqueous dispersion (pH = 6.6 and electrical conductivity = 0.075 mS) was put in a 30-ml temperature-adjustable container. A silver wire having a known weight and a diameter of 1 mm was disposed as an anode parallel to a platinum wire having a diameter of 1 mm and serving as a cathode with a distance of 1 cm left between the anode and the cathode. Both the electrodes were immersed 22 mm in length in the aqueous dispersion.

After controlling temperature of the aqueous dispersion to a predetermined value, a constant voltage of 30 V was charged from a DC stabilized power supply between the anode and the cathode to flow a DC current for 30 seconds. As a result, a fluororesin-containing porous deposit was electrodeposited on the surface of the silver wire, i.e., the anode, by electrophoresis.

The silver wire including the fluororesin-containing porous deposit formed thereon was taken out and measured for the weight including the solvent (water) and then for the weight after drying at the room temperature for 24 hours in order to determine the amount of electrodeposit and the content of the solvent (water).

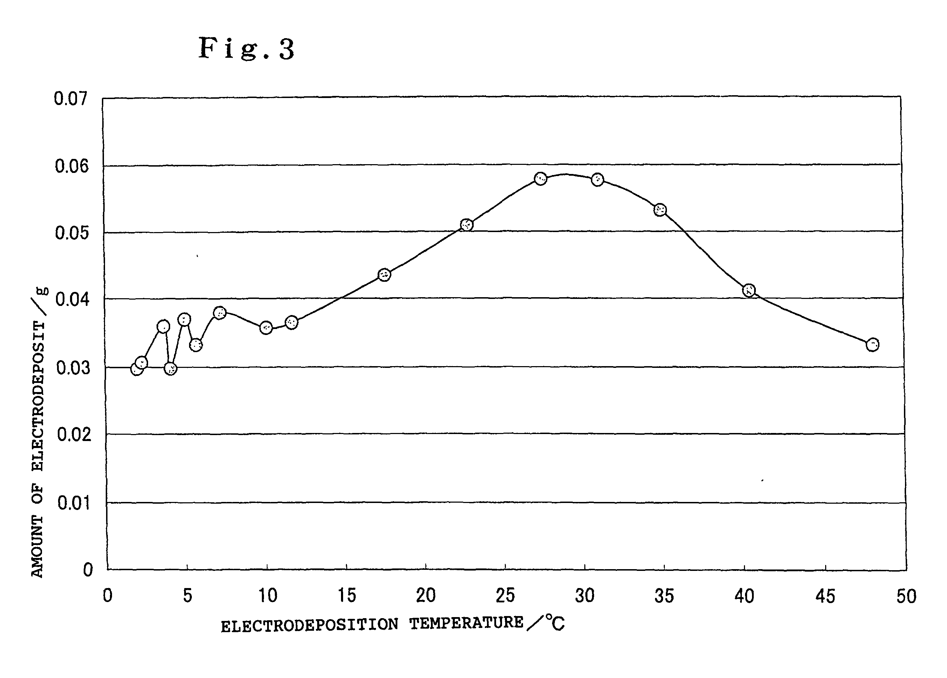

The relationships among the temperature, the current value, the voltage, the amount of electrodeposit, and the content of the solvent (water), which were measured during the electrophoresis process, are shown in Figs. 3 to 5.

Fig. 3 is a graph showing temperature dependency of the amount of electrodeposit. As seen from the graph, the amount of electrodeposit increases as the temperature rises up to 30°C, but it decreases when the temperature exceeds 30°C. This result is presumably caused by the fact that, at temperature exceeding 30°C, the binding force is weakened and the electrodeposit runs out when it is lifted out of the aqueous dispersion.

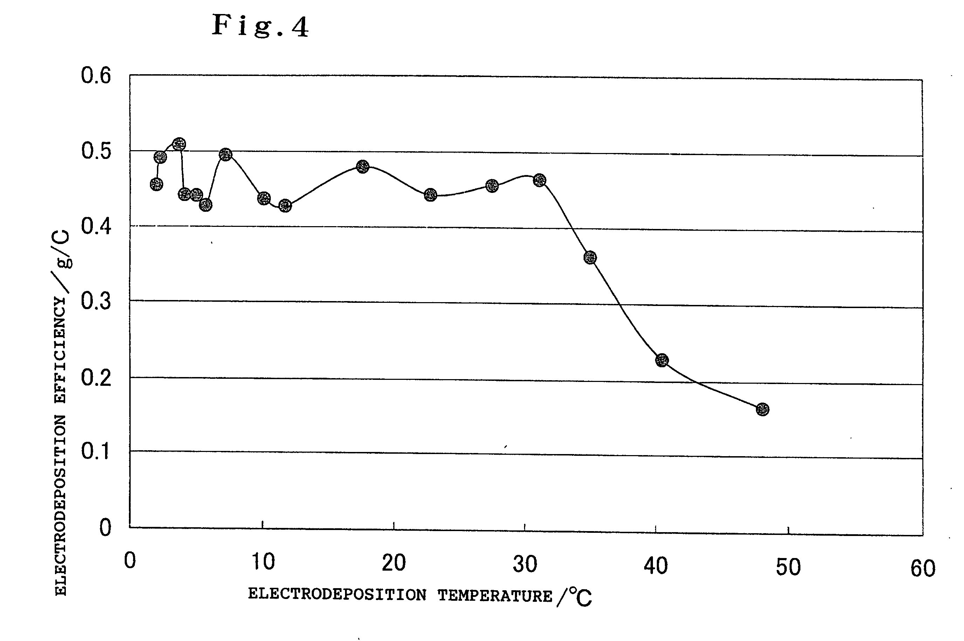

Fig. 4 is a graph showing temperature dependency of electrodeposition efficiency (amount electrodeposited per coulomb). As seen from the graph, the electrodeposition efficiency remains substantially at the same value, i.e., 0.45 g/C, until the temperature rises up to 30°C, but it quickly decreases when the temperature exceeds 30°C.

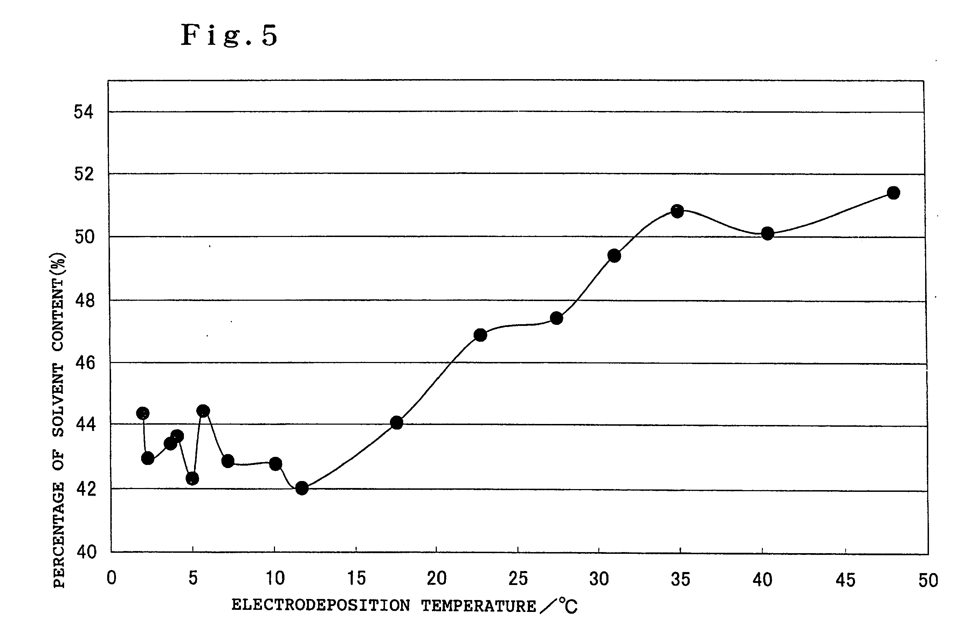

Fig. 5 is a graph showing temperature dependency of the percentage of the solvent content. When the temperature exceeds 30°C, the percentage of the solvent content exceeds 50%. It is hence estimated that, at the temperature higher than 30°C, the fluidity of the electrodeposit is increased and the binding force or the adhesion force thereof is reduced.

### Example 8

An aqueous dispersion was prepared by putting 100 g of carbon black No. 6 in 1000 ml of ion exchange water containing 4% of Triton, mechanically dispersing the carbon black using a jet mill for reducing the mean particle size to 0.5 micron, and adding a PTFE dispersion at a ratio of carbon black : PTFE = 60:40, followed by mixing under agitation. The thus-prepared dispersion had a pH-value of 6.83 and the electrical conductivity of 0.079 µS/cm.

A metal plate was disposed in a lower portion of a cylindrical electrodeposition vessel with a diameter of 40 mm and a depth of 30 mm, and a nickel mesh was disposed in a lower portion of the vessel such that a distance of 15 mm was left between the metal plate and the nickel mesh.

The prepared dispersion was filled in the vessel up to a level 1 mm above the nickel mesh. Electrodeposition was performed for 3 minutes while charging a voltage of 30 V between the metal plate as an anode and the nickel mesh as a cathode.

The weight of the water-impregnated electrodeposit was obtained by measuring the weight of the metal plate after the electrodeposition, and then subtracting the previously measured dead weight of the metal plate from the measured weight. Also, the percentage of the water content was calculated by measuring the weight of the electrodeposit after drying. Table 1 shows results thus obtained when using various metals as materials of the metal plate.

As seen from Table 1, even with the same voltage applied for the electrodeposition, the amount of electrodeposit and the amount of electricity differ depending on the kinds of metals. Among the various kinds of metals, copper and zinc are suitable for achieving high electrodeposition efficiency in the case of using a system of the above-described dispersion. In particular, the electrodeposit having the lowest percentage of the water content is obtained by using a Zn plate.

**Table 1**

| | After Electro-Deposition (mg) | After Drying (mg) | Amount of Electricity (mC) | Rate of Water Content |
|---|---|---|---|---|
| Zn Plate | 3012 | 1877 | 2737 | 0.377 |
| Cu Plate | 2584 | 1560 | 2274 | 0.396 |
| Fe Plate | 2294 | 1374 | 2670 | 0.401 |
| Carbon Plate | 2054 | 1184 | 3407 | 0.423 |
| Al Plate | 2116 | 1172 | 1920 | 0.446 |
| Brass Plate | 1811 | 1099 | 3077 | 0.393 |
| Ni Plate | 1813 | 1069 | 2784 | 0.410 |
| Koval Plate | 1745 | 1000 | 2696 | 0.427 |
| Ag Plate | 1558 | 934 | 2165 | 0.401 |
| Pt Plate | 1562 | 897 | 2888 | 0.426 |
| Mo Plate | 1499 | 882 | 3663 | 0.412 |
| Sn Plate | 1527 | 849 | 2935 | 0.444 |
| 45 Permalloy Plate | 1452 | 833 | 3146 | 0.426 |
| Zr Plate | 1332 | 771 | 2972 | 0.421 |
| Ti Plate | 1146 | 640 | 2340 | 0.442 |
| W Plate | 489 | 237 | 1564 | 0.515 |

### Example 9

### <Fabrication of Polymer Electrolyte Fuel Cell>

A 6 cm-square stainless foil with an insulated lead was laid at the bottom of a 6 cm-square acrylic container having a depth of 2 cm. A foamed nickel cathode having a thickness of 2 mm and a pore size of 50 ppi was disposed as an opposite electrode parallel to the stainless foil at a position 1 cm above the stainless foil.

A solution of a polymer electrolyte (5-wt% Nafion solution made by Aldrich) was filled in the vessel such that the foamed nickel cathode was immersed in the solution. A voltage of 50 V was charged between both the electrodes for 30 seconds. As a result, a polymer electrolyte (Nafion) film of 60 microns was formed on the stainless foil.

A 6 cm-square stainless foil with an insulated lead was laid at the bottom of the 6 cm-square acrylic vessel having a depth of 2 cm. A foamed nickel cathode having a thickness of 2 mm and a pore size of 50 ppi was disposed as an opposite electrode parallel to the stainless foil at a position 1 cm above the stainless foil.

A liquid dispersion for forming a reaction layer was filled in the container. This liquid dispersion was a mixture of a liquid dispersion, which was prepared by dispersing 2.5 g of hydrophilic carbon black carrying 30 wt% of platinum (AB-12; made by DENKI KAGAKU KOGYO KABUSHIKI KAISHA) and 1 g of low-molecular PTFE (Lubron; made byDAIKIN INDUSTRIES Ltd.) in 100 ml of ethanol with ultrasonic waves, and mixing 25 ml of solution of a polymer electrolyte (5-wt% Nafion solution made by Aldrich).

The reaction layer was formed on the stainless foil by charging a voltage of 30 V for 15 seconds. Thereafter, the electrophoresis liquid was quickly removed out of the vessel, and the solution of the polymer electrolyte (5-wt% Nafion solution made by Aldrich) was filled in the same vessel such that the foamed nickel cathode was immersed in the solution.

Then, a voltage of 30 V was charged between both the electrodes for 30 seconds. As a result, a polymer electrolyte (Nafion) film of 40 microns was formed on the stainless foil.

Two stainless foils each having the reaction layer and the polymer electrolyte (Nafion) film thus electrodeposited thereon were formed and joined to each other in a half dried state under heating and pressing with conditions of pressure of 100 kg/cm², temperature of 135°C and 1 minute. Then, a reaction layer/electrolyte film joined sheet was obtained by peeling off the stainless foils.

Two sheets of water-repellent carbon paper each cut to a 5-cm square were disposed as gas diffusion layers on both sides of the reaction layer/electrolyte film joined sheet, and this assembly was held between end metal plates formed with gas supply passages. The polymer electrolyte fuel cell according to the present invention was thus fabricated.

### Comparative Example 1

### <Fabrication of Polymer Electrolyte Fuel Cell>

A reaction layer/electrolyte film joined sheet was fabricated by coating a dispersion for forming a reaction layer on a film of a polymer electrolyte (Nafion 115 made by DuPont).

The content of a platinum catalyst in the reaction layer was 0.3 mg/cm².

Similarly to Example 9, two sheets of water-repellent carbon paper each cut to a 5-cm square were disposed as gas diffusion layers on both sides of the reaction layer/electrolyte film joined sheet, and joined together into a laminate sheet under heating and pressing with conditions of pressure of 100 kg/cm², temperature of 135°C and 2 minutes. A comparative polymer electrolyte fuel cell was fabricated by holding the laminate sheet between end metal plates formed with gas supply passages.

### <Evaluation of Polymer Electrolyte Fuel Cells>

The two polymer electrolyte fuel cells fabricated as described above were each operated under the following conditions and measured for a current-voltage characteristic.

Pure hydrogen and pure oxygen were humidified with respective humidifiers (glass bubblers) set to a temperature of 83°C, and then supplied to each fuel cell under the atmospheric pressure.

As a result, an output of 0.73 V at current density of 0.3 A/cm² was obtained in the fuel cell of the present invention.

On the other hand, an output of 0.67 V at current density of 0.3 A/cm² was just obtained in the fuel cell of the comparative example.

### Example 10

### <Fabrication of Polymer Electrolyte Fuel Cell>

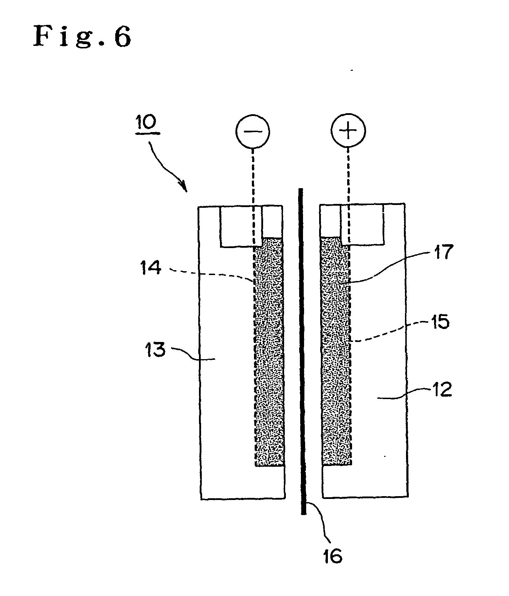

As shown in Fig. 6, a 6 cm-square recess having a depth of 5 mm was formed in each of 10 cm-square acrylic plates 12, 13 having a thickness of 1.5 cm, and 6 cm-square platinum meshes 14, 15 with insulated leads were each disposed at the bottom of the recess.

A film 16 of a polymer electrolyte (Nafion 115 made by DuPont), which was swollen with ethanol, was held between the two acrylic plates, and this assembly was tightly fastened at four corners by screws, thereby forming an acrylic cell 10 in which an electrodeposition liquid dispersion 7 was contained in a sealed state.

The liquid dispersion was prepared by mixing 80 ml of solution of a polymer electrolyte (5-wt% Nafion solution made by Aldrich), 200 ml of ethanol, 3.6 g of hydrophilic carbon black carrying 30 wt% of platinum (AB-12; made by DENKI KAGAKU KOGYO KABUSHIKI KAISHA), and 2.7 g of low-molecular PTFE (Lubron; made by DAIKIN INDUSTRIES Ltd.) with each other, and then dispersing the liquid with ultrasonic waves.

The prepared liquid dispersion was filled in the acrylic cell 10, and a voltage of 20 V was charged between both the electrodes for 30 seconds. As a result, a reaction layer was formed on one surface of the polymer electrolyte film (on the cathode chamber side).

While the reaction layer was in a half dried state, the polymer electrolyte film and the reaction layer were firmly joined to each other under heating and pressing with conditions of pressure of 100 kg/cm², temperature of 135°C and 1 minute. The reaction layer had a film thickness of about 0.1 mm.

Another acrylic cell 10 was formed in the same manner as described above except for setting the polymer electrolyte film including the reaction layer firmly joined to it such that the film surface joined to the reaction layer was positioned on the anode chamber side. Then, a polymer electrolyte film having the reaction layers formed on both surfaces was obtained by electrodeposition performed using the thus-formed acrylic cell 10.

While the electrodeposited reaction layer was in a half dried state, the laminate was again subjected to heating and pressing with conditions of pressure of 100 kg/cm², temperature of 135°C and 1 minute in order to firmly join the polymer electrolyte film and the reaction layers together.

The polymer electrolyte film having the reaction layers formed on both surfaces was held between end metal plates formed with gas supply passages while sheets of water-repellent carbon paper were interposed between the film and the end plates. The polymer electrolyte fuel cell according to the present invention was thus fabricated.

The content of platinum in the reaction layers formed in this example was in the range of 0.4 to 0.6 mg/cm².

When the polymer electrolyte fuel cell fabricated as described above was operated at a temperature of 80°C in the same manner as that in the above example, a cell output voltage of 0.72 V at current density of 0.3 A/cm² was obtained.

### Industrial Applicability

With the gas diffusion electrode according to the present invention, a gas supply layer or a reaction layer is formed of, for example, a sheet obtained, particularly after addition of solvent naphtha, from a fluororesin-containing porous deposit, which is formed on the surface of a conductive base and in which gas diffusion electrode materials primarily comprising micro particles of fluororesin are evenly dispersed. Therefore, a gas diffusion electrode having improved performance and life can be easily fabricated in a short time.

In particular, with the present invention, the apparatus construction for manufacturing the gas diffusion electrode can be simplified and therefore the equipment cost can be reduced. Since an electrical current hardly flows between both the electrodes, the operating costs can be reduced. Since a uniform electric field is formed between the two electrodes, the gas supply layer and/or the reaction layer free from unevenness in thickness can be formed.

Also, since the gas diffusion electrode materials can be quickly deposited on the surface of the conductive base by electrophoresis, it is possible to form the gas supply layer and/or the reaction layer in a short time. As another advantage, the present invention is superior in mass-production because the gas supply layer and/or the reaction layer can be formed by continuously depositing micro particles on the surface of a metal mesh serving as a current collector.

Further, a gas supply layer sheet or a reaction layer sheet obtained by the manufacturing method of the present invention is a dried sheet free from cracks and does not cause peeling-off of the sheet during subsequent steps. Therefore, a gas diffusion electrode causing no unevenness of strength after hot pressing and having a long life can be obtained.

Moreover, in a polymer electrolyte fuel cell employing the gas diffusion electrode of the present invention, because of utilization of electrophoresis, a thin electrode can be easily fabricated and a reaction layer containing polymer electrolyte molecules dispersed around catalyst-carrying carbon black can be easily formed. Therefore, continuity of proton paths can be ensured between the reaction layer and the polymer electrolyte layer, and a fuel cell having high performance can be obtained.

Use of electrophoresis provides the following additional advantages. An electrical current hardly flows between the two electrodes, and hence the power consumption is very small. Since a uniform electric field is formed between the two electrodes, a polymer electrolyte film, a reaction layer or a gas supply layer free from unevenness in thickness can be formed in a short time. Since micro particles of the gas diffusion electrode materials adhere to the electrode surface by the force of electricity, i.e., the Coulomb force, a large adhesion force is obtained and the gas supply layer and/or the reaction layer can be formed with high efficiency.

Consequently, the present invention can be widely applied to various industrial fields as an electrode for use in a fuel cell or a chlor-alkari electrolysis and as a fuel cell.

## Claims

1. A method for manufacturing a gas diffusion electrode comprising the steps of forming a fluororesin-containing porous deposit on a surface of a conductive base by electrophoresis of gas diffusion electrode materials primarily comprising micro particles of fluororesin dispersed in dispersion medium, and employing the formed fluororesin-containing porous deposit as a gas supply layer or/and a reaction layer of the gas diffusion electrode.

2. A method for manufacturing a gas diffusion electrode according to claim 1 wherein one or more kinds of micro particles selected from among hydrophobic carbon black hydrophilic carbon black and catalysts are also dispersed in the dispersion medium.

3. A method for manufacturing a gas diffusion electrode according to Claim 1 or 2, wherein the electrophoresis is performed at an adjusted electrical conductivity.

4. A method for manufacturing a gas diffusion electrode according to Claim 3, wherein the electrical conductivity is adjusted with an ion exchange resin.

5. A method for manufacturing a gas diffusion electrode according to Claim 1 or 2, wherein the electrophoresis is performed while the temperature of said dispersion medium is held to be not higher than 30°C.

6. A method for manufacturing a gas diffusion electrode according to Claim 1 or 2, wherein the electrophoresis is performed by applying a DC voltage between said conductive base serving as an anode and an opposite electrode serving as a cathode, said anode and cathode being immersed in a liquid dispersion of gas diffusion electrode materials containing micro particles of fluororesin as a primary constituent and one or more kinds of micro particles selected from among micro particles of hydrophobic carbon black, hydrophilic carbon black, and catalysts.

7. A method for manufacturing a gas diffusion electrode according to Claim 6, wherein the electrophoresis is performed with a filter disposed between said anode and said cathode.

8. A method for manufacturing a gas diffusion electrode according to Claim 6, wherein the electrophoresis is performed with a diaphragm disposed between said anode and said cathode for division into an anode chamber and a cathode chamber.

9. A method for manufacturing an electrode sheet for a gas diffusion electrode comprising the steps of drying a fluororesin-containing porous deposit obtained by a manufacturing method according to any one of Claims 1 to 8, impregnating with solvent naphtha, and shaping into an electrode sheet by rolling, or the steps of holding the fluororesin-containing porous deposit between porous films from both surfaces of the deposit, holding the thus-obtained assembly between perforated plates allowing gas to pass therethrough under pressure, and removing a solvent from the fluororesin-containing porous deposit under pressure and temperature.

10. A method for manufacturing a fuel cell comprising the steps of using, as a compositional material, a gas diffusion electrode made according to the method of Claim 1.

11. The method of claim 10, wherein the fuel cell is a polymer electrolyte fuel cell.

12. The method of Claim 11, wherein the polymer electrolyte is formed in a film by electrophoresis on a perforated plate disposed near an anode immersed in a solution of the polymer electrolyte.

13. The method of claim 11, wherein the solution of the polymer electrolyte contains micro particles as dispersoid, and the formed polymer electrolyte contains the micro particles.

## Patentansprüche

1. Verfahren zur Herstellung einer Gasdiffusionselektrode, das die folgenden Schritte aufweist: Ausbilden einer fluorharzhaltigen porösen Abscheidung auf einer Oberfläche eines leitfähigen Schichtträgers durch Elektrophorese von Gasdiffusionselektrodenmaterialien, die hauptsächlich Mikroteilchen aus Fluorharz aufweisen, die in einem Dispersionsmittel dispergiert sind, und Anwendung der gebildeten fluorharzhaltigen porösen Abscheidung als Gaszufuhrschicht oder/und Reaktionsschicht der Gasdiffusionselektrode.

2. Verfahren zur Herstellung einer Gasdiffusionselektrode nach Anspruch 1, wobei eine oder mehrere Arten von Mikroteilchen, die unter hydrophobem Ruß, hydrophilem Ruß und Katalysatoren ausgewählt sind gleichfalls in dem Dispersionsmittel dispergiert sind.

3. Verfahren zur Herstellung einer Gasdiffusionselektrode nach Anspruch 1 oder 2, wobei die Elektrophorese bei einer regulierten elektrischen Leitfähigkeit durchgeführt wird.

4. Verfahren zur Herstellung einer Gasdiffusionselektrode nach Anspruch 3, wobei die elektrische Leitfähigkeit mit einem Ionenaustauschharz reguliert wird.

5. Verfahren zur Herstellung einer Gasdiffusionselektrode nach Anspruch 1 oder 2, wobei die Elektrophorese durchgeführt wird, während die Temperatur des Dispersionsmittels auf einem Wert von nicht mehr als 30°C gehalten wird.

6. Verfahren zur Herstellung einer Gasdiffusionselektrode nach Anspruch 1 oder 2, wobei die Elektrophorese durchgeführt wird, indem eine Gleichspannung zwischen dem als Anode dienenden leitfähigen Schichtträger und einer als Kathode dienenden Gegenelektrode angelegt wird, wobei die Anode und die Kathode in eine flüssige Dispersion von Gasdiffusionselektrodenmaterialien eingetaucht werden, die Mikroteilchen aus Fluorharz als Hauptbestandteil und eine oder mehrere Arten von Mikroteilchen enthält, die unter Mikroteilchen aus hydrophobem Ruß, hydrophilem Ruß und Katalysatoren ausgewählt sind.

7. Verfahren zur Herstellung einer Gasdiffusionselektrode nach Anspruch 6, wobei die Elektrophorese mit einem zwischen der Anode und der Kathode angeordneten Filter durchgeführt wird.

8. Verfahren zur Herstellung einer Gasdiffusionselektrode nach Anspruch 6, wobei die Elektrophorese mit einer zwischen der Anode und der Kathode angeordneten Membran zur Unterteilung in eine Anodenkammer und eine Kathodenkammer durchgeführt wird.

9. Verfahren zur Herstellung einer Elektrodenfolie für eine Gasdiffusionselektrode mit den folgenden Schritten: Trocknen einer fluorharzhaltigen porösen Abscheidung, die man durch ein Herstellungsverfahren nach einem der Ansprüche 1 bis 8 erhält, Imprägnieren mit Solventnaphtha und Formen zu einer Elektrodenfolie durch Rollen, oder mit den Schritten: Aufnehmen der fluorharzhaltigen porösen Abscheidung zwischen porösen Filmen von beiden Oberflächen der Abscheidung her, Aufnehmen der so erhaltenen Baugruppe zwischen Lochplatten, die unter Druck Gas durchlassen, und Entfernen eines Lösungsmittels aus der fluorharzhaltigen porösen Abscheidung unter Druck und Temperatur.

10. Verfahren zur Herstellung einer Brennstoffzelle, das die Schritte zum Verwenden einer nach dem Verfahren von Anspruch 1 hergestellten Gasdiffusionselektrode als Zusammensetzungsmaterial aufweist.

11. Verfahren nach Anspruch 10, wobei die Brennstoffzelle eine Polymerelektrolyt-Brennstoffzelle ist.

12. Verfahren nach Anspruch 11, wobei der Polymerelektrolyt durch Elektrophorese in einer Schicht auf einer Lochplatte ausgebildet wird, die in der Nähe einer in eine Lösung des Polymerelektrolyts eingetauchten Anode angeordnet ist.

13. Verfahren nach Anspruch 11, wobei die Polymerelektrolytlösung Mikroteilchen als Dispersoid enthält und der gebildete Polymerelektrolyt die Mikroteilchen enthält.

## Revendications

1. Procédé de fabrication d'une électrode à diffusion de gaz comprenant les étapes de formation d'un dépôt poreux contenant une fluororésine sur une surface d'une base conductrice par électrophorèse de matériaux d'électrode à diffusion de gaz comprenant principalement des microparticules de fluororésine dispersées dans un milieu de dispersion, et utilisant le dépôt poreux formé contenant la fluororésine comme une couche de fourniture de gaz ou/et une couche réactionnelle d'électrode à diffusion de gaz.

2. Procédé de fabrication d'une électrode à diffusion de gaz selon la revendication 1 dans lequel un ou plusieurs type(s) de microparticules choisies parmi le noir de carbone hydrophobe, le noir de carbone hydrophile et des catalyseurs est(sont) également dispersé(s) dans le milieu de dispersion.

3. Procédé de fabrication d'une électrode à diffusion de gaz, selon la revendication 1 ou 2, dans lequel l'électrophorèse est effectuée à une conductivité électrique ajustée.

4. Procédé de fabrication d'une électrode à diffusion de gaz, selon la revendication 3, dans lequel la conductivité électrique est ajustée avec une résine échangeuse d'ions.

5. Procédé de fabrication d'une électrode à diffusion de gaz selon la revendication 1 ou 2, dans lequel l'électrophorèse est effectuée tandis que la température dudit milieu de dispersion est maintenue pour être non supérieure à 30°C.

6. Procédé de fabrication d'une électrode à diffusion de gaz selon la revendication 1 ou 2, dans lequel l'électrophorèse est effectuée en appliquant une tension en courant continu entre ladite base conductrice servant d'anode et une électrode opposée servant de cathode, lesdites anode et cathode étant immergées dans une dispersion liquide de matériaux d'électrode à diffusion de gaz contenant des microparticules de fluororésine comme constituant primaire et un ou plusieurs types de microparticules choisies parmi les microparticules de noir de carbone hydrophobe, de noir de carbone hydrophile et de catalyseurs.

7. Procédé de fabrication d'une électrode à diffusion de gaz selon la revendication 6, dans lequel l'électrophorèse est effectuée avec un filtre disposé entre ladite anode et ladite cathode.

8. Procédé de fabrication d'une électrode à diffusion de gaz selon la revendication 6, dans lequel l'électrophorèse est effectuée avec un diaphragme disposé entre ladite anode et ladite cathode pour la répartition en une chambre de type anode et une chambre de type cathode.

9. Procédé de fabrication d'une feuille d'électrode pour une électrode à diffusion de gaz comprenant les étapes de séchage d'un dépôt poreux contenant une fluororésine obtenu par un procédé de fabrication selon l'une quelconque des revendications 1 à 8, l'imprégnation avec du solvant naphta, et la mise en forme en une feuille d'électrode par roulage ou les étapes de maintien du dépôt poreux contenant une fluororésine entre des films poreux à partir des deux surfaces du dépôt, le maintien de l'assemblage ainsi obtenu entre des plaques perforées laissant du gaz passer à travers sous pression, et l'élimination d'un solvant du dépôt poreux contenant une fluororésine sous une certaine pression et température.

10. Procédé de fabrication d'une pile à combustible comprenant les étapes d'utilisation comme matériau de composition, d'une électrode à diffusion de gaz fabriquée selon le procédé de la revendication 1.

11. Procédé selon la revendication 10, dans lequel la pile à combustible est une pile à combustible à électrolyte de type polymère.

12. Procédé selon la revendication 11, dans lequel l'électrolyte de type polymère est formé en un film par électrophorèse sur une plaque perforée disposée près d'une anode immergée dans une solution de l'électrolyte de type polymère.

13. Procédé selon la revendication 11, dans lequel la solution de l'électrolyte de type polymère contient des microparticules sous la forme d'une dispersion, et l'électrolyte de type polymère formé contient les microparticules.
